# EUROPEAN PATENT APPLICATION

(11) **EP 1 935 250 A1**
(43) Date of publication of application: **25.06.2008**
(21) Application number: 06026749.9
(22) Date of filing: 22.12.2006
(51) Int. Cl.: A23G 3/28, B44C 1/17, A23G 3/00, A23L 1/275

(54) **A food decorating kit**

(71) Applicant: Nestec S.A., 1800 Vevey (CH)
(72) Inventor: Filkova, Irina, York YO24 1BH (GB); Gamal, Rachid, CH-1816 Chailly S/Montreux (CH); Mortimer, Ben Bryan, Harrogate HG1 4HX (GB)

(57) **Abstract**

The present invention is directed to a food kit comprising at least one food item made of a first type of food product and a support item coated with a layer at least one second type of another food product, characterized in that said second type of food product is adapted to be transferred to said at least one first type of food product when said first and second types of products are put in contact and pressure is applied onto the non-coated surface of said support,

## Description

The present invention concerns a food kit, more precisely a food kit allowing a consumer to personalize a food item.

In the following description for clarity purposes, the food item will be described as a chocolate tablet. However such an example should not be limiting, as the present invention may well apply to other food items such as for example pastries, confectionery items or else.

In the food industry, food items are produced in large series and then sold to consumers which are all similar, due to mass production constraints,

However, there was recently a growing interest for products that are produced industrially, and though which are somehow personalized. In order to give a feel to the consumer that a product bought is really unique, some food products are manufactured in very small quantities. But such small series have a major disadvantage in that production costs of small series are much higher. Moreover, the small series do not offer the consumer the possibility to customize its own product, for instance when such food product item is purchased as a gift.

There is therefore a need for food products items which can be produced in a mass production - i.e. in a large scale industrial - , while allowing the consumer to customize said food product item in an easy and reliable way.

The present invention meets the above need by providing a food kit comprising at least one food item made of a first type of food product and a support item coated with a layer at least one second type of another food product.

According to the present invention, the food kit is characterized in that said second type of food product is adapted to be transferred, at least partially, to said at least one first type of food product when said first and second types of products are put in contact and pressure is applied onto the non-coated surface of said support.

With such a food kit, the consumer is provided with a possibility to personalize the food product item, for instance the chocolate tablet he purchases, by transfer-writing a message or a drawing onto said chocolate tablet.

The food kit can further optionally comprise a pen-like tool to allow a consumer to apply pressure to the non-coated surface of the support item for transferring the second type of product onto the first type of product.

In a first embodiment of the invention, said support item is a flexible paper sheet.

In a second embodiment of the invention, said support item is a flexible plastic sheet having a thickness less than 50 µm, preferably less than 20 µm.

Advantageously, the said food product item is a confectionery or chocolate product.

Even more advantageously, the said food product item is a dark chocolate tablet.

Preferably, the second type of food product, that constitutes the coating layer of the support item, is selected within the list comprising : food-grade material having integrated edible gold particles, white chocolate, jellified sugar mixes comprising sugar and white egg, starch mixtures, jellified fruit syrups, and mixtures thereof.

Also preferably, the layer of said second type of food product coating the support item, has a thickness lower than 104 µm, preferably less than 50 µm, more preferably less than 20 µm.

In a highly preferred embodiment of the present invention, the second type of food product is adapted to be transferred at room temperature, i.e. at a temperature comprised between 5 and 45°C, more preferably at a temperature comprised between 15°C and 25°C. In other words, the transfer of the food product coating does not require a specific heating or cooling treatment of the kit items, so that use of the kit is rendered as easy as possible : the consumer opens the kit package, applies the coating layer of the support item to the food product item (e.g. a chocolate tablet) and then applies manually a pressure, by using a pen-like tool to draw or write a message. Due to the pressure, the second type of food product that makes the coating layer onto the support item, is transferred and adheres to the surface of the chocolate tablet. In that way, it is easy to write an "edible message" onto the tablet, before offering the latter as a gift for instance.

Another aspect of the present invention relates to a support item coated with an edible product for use with a food product item, characterized in that said support is a flexible sheet coated with a layer of an edible food product adapted to be transferred to said food product item when said layer of food product and said food product item are put in contact, and pressure is applied onto the non-coated surface of said support item.

With such a support item, it is possible to transfer an edible food product, or at least part of it, onto a food item, such as for instance a chocolate tablet provided to the consumer separately from said support item.

Additional features and advantages of the present invention are described in, and will be apparent from, the description of the presently preferred embodiments which are set out below with reference to the drawings in which:

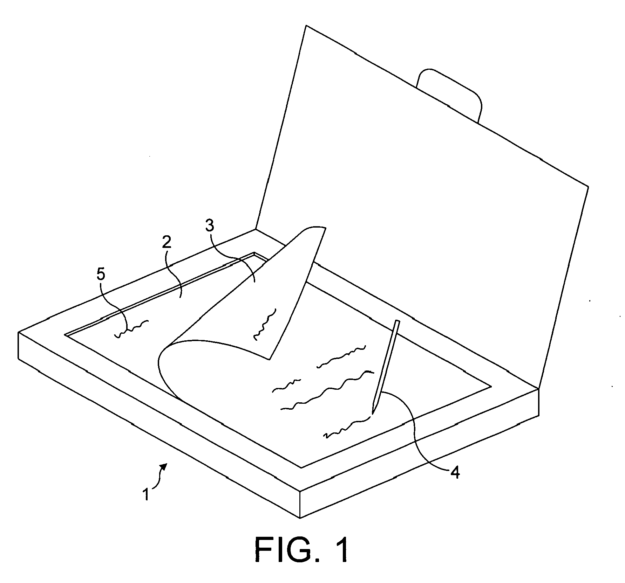

Figure 1 is a perspective view of a food kit as per the invention,

As can be seen in Figure 1, the food kit 1 of part according to the present invention comprises one food item 2 made of a first type of food product, which is a dark chocolate tablet, and a support item 3 coated (at least partially) with a layer of a second type of another food product.

More precisely, said support item is a flexible paper sheet 3 that is coated with a thin layer of white chocolate. The layer has a thickness of about 20 !-1m.

The white chocolate coating is adapted - i.e. formulated - to be transferred, to the surface of the dark chocolate tablet 2. As shown in figure 1, the transfer is made by applying the coated surface of the paper sheet 3 in contact with the surface of the chocolate tablet, and the applying a pressure with the pen-like tool 4, typically by writing a message or drawing. Due to the pressure force, the coating transfers from the paper sheet to the surface of dark chocolate, so that the written text 5 or drawing made out of white chocolate appears onto the surface of dark chocolate.

Importantly, the transfer of white chocolate from the paper sheet surface to the dark chocolate tablet surface is realized at room temperature, i.e. at about 20°C, without need for a preliminary treatment of the parts of the kit.

The food kit 1 according to the present invention is intended to be marketed in a single packaging - not shown on the drawing - containing the different elements: at least one dark chocolate tablet 2, at least one paper sheet 3 coated with white chocolate on at least one of its sides, and one pen-like tool 4.

In another embodiment of the present invention, not illustrated, is also provided a single support item coated with an edible product, like a paper sheet coated with white chocolate as described hereinbefore, for use with a food product item such as dark chocolate tablet that would be marketed separately from the support item.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications be covered by the appended claims.

## Claims

1. A food kit comprising at least one food item made of a first type of food product and a support item coated with a layer at least one second type of another food product, **characterized in that** said second type of food product is adapted to be transferred, at least partially, to said at least one first type of food product when said first and second types of products are put in contact and pressure is applied onto the non-coated surface of said support.

2. A food kit according to claim 1, which further comprises a pen-like tool to allow a consumer to apply pressure to the non-coated surface of the support item for transferring the second type of product onto the first type of product.

3. A food kit according to any of the preceding claims, wherein said support item is a flexible paper sheet.

4. A food kit according to any of claims 1 or 2, wherein said support item is a flexible plastic sheet having a thickness less than 50 µm, preferably less than 20 µm.

5. A food kit according to any of the preceding claims, wherein said food product item is a confectionery or chocolate product.

6. A food kit according to claim 5, wherein said food product item is a dark chocolate tablet.

7. A food kit according to any of the preceding claims, wherein said second type of food product is selected within the list comprising : food-grade material having integrated edible gold particles, white chocolate, jellified sugar mixes comprising sugar and white egg, starch mixtures, jellified fruit syrups, and mixtures thereof.

8. A food kit according to any of the preceding claims, wherein the layer of said second type of food product coating the support item, has a thickness lower than 100 µm, preferably less than 50 µm, more preferably less than 20 µm.

9. A food kit according to any of the preceding claims, wherein the second type of product to be transferred onto the food product item is adapted for a transfer at room temperature.

10. A support item coated with an edible product for use with a food product item, **characterized in that** said support is a flexible sheet coated with a layer of an edible food product adapted to be transferred to said food product item when said layer of food product and said food product item are put in contact, and pressure is applied onto the non-coated surface of said support item.
